# EUROPÄISCHE PATENTSCHRIFT

(11) **EP 3 047 718 B1**
(45) Veröffentlichungstag und Bekanntmachung des Hinweises auf die Patenterteilung: **16.08.2017**
(21) Anmeldenummer: 16401006.8
(22) Anmeldetag: 18.01.2016
(51) Int. Cl.: A01C 7/10, A01C 7/12

(54) **SÄMASCHINE**
SOWING MACHINE
SEMOIR

(30) Priorität: 26.01.2015 DE 102015101040
(43) Veröffentlichungstag der Anmeldung: 27.07.2016
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Schmidt, Geert Hermann, 27798 Hude (DE)

(56) Entgegenhaltungen:
- EP-A1- 2 022 308
- EP-A1- 2 807 915
- DE-A1-102010 002 200
- DE-U1- 29 820 684

## Beschreibung

Die Erfindung betrifft eine Sämaschine gemäß des Oberbegriffes des Patentanspruches 1.

Eine derartige Sämaschine ist in DE 10 2013 105 447 A1 beschrieben. Bei dieser Sämaschine werden die Abdrehmulden von der Seite der Sämaschine unterhalb der Dosiereinrichtungen zur Durchführung der Abdrehprobe eingeschoben. Nach dem Einschieben der Abdrehmulden wird das von den Dosiereinrichtungen bei der Abdrehprobe dosierte Material von den Abdrehmulden aufgefangen. Nach der Durchführung der Abdrehprobe werden die Abdrehmulden an einer die Dosierung nicht behindernden Stelle an der Sämaschine verstaut.

Durch die DE 475086 ist eine Sämaschine mit Abdrehmulde bekannt, die auf der Rückseite der Sämaschine um eine quer zur Fahrtrichtung verlaufende Achse verschwenkbar angeordnet ist und durch das Verschwenken in eine Abdreh- und eine Nichtabdrehposition verbracht werden kann. Die Schwenkachse zum Verschwenken der Abdrehmulde befindet sich an der einen Längsseite der Abdrehmulde.

Eine weitere Sämaschine mit den Merkmalen des Oberbegriffs des Anspruchs 1 ist aus der DE 298 20 684 U1 bekannt. Der Erfindung liegt die Aufgabe zu Grunde, eine Abdrehmulde zu schaffen, die einfach ausgestaltet ist und einfach in Abdreh- und Nichtabdrehposition verbracht werden kann, wobei sichergestellt ist, dass in der Nichtabdrehposition kein Material in die Abdrehmulde gelangen kann.

Diese Aufgabe der erfindungsgemäß dadurch gelöst, dass die Abdrehmulde einen kreisförmigen Querschnitt aufweist, dass die Abdrehmulde an der Sämaschine in der Schiebeführung um ihre Längsachse zumindest um 180° verdrehbar angeordnet ist.

Infolge dieser Maßnahme lassen sich die in eingeschobener Position befindlichen Abdrehmulden durch einfaches Drehen um ihre Längsachse wahlweise in die Abdrehposition oder in die Nichtabdrehposition bringen. Somit können sie in der einen Position das Material bei der Abdrehprobe auffangen und andererseits ist sichergestellt, dass in der Nichtabdrehposition kein Material oder Sonstiges, wie Regenflüssigkeit, etc. in die Abdrehmulde gelangen kann. Damit das Material von den Dosiereinrichtungen in die sich in Abdrehposition befindliche Abdrehmulde gelangen kann, ist zwischen der jeweiligen Dosiereinrichtung und der Abdrehmulde ein vorzugsweise umstellbares Leitelement angeordnet. Dieses Leitelement ist dann nach Ende der Durchführung der Abdrehprobe in eine derartige Position einzustellen, damit das dosierte und auszubringende Material von den jeweiligen Dosiereinrichtungen zu den zugeordneten Saatleitungen gelangt.

Damit die Abdrehmulde in einfacher Weise in ihre jeweilige Position, nämlich in die Abdrehposition und die Nichtabdrehposition verbracht werden kann, ist vorgesehen, dass die Schiebeführung für das Verdrehen der Abdrehmulde um ihre Längsachse in der Schiebeführung eine Drehlagerung aufweist.

Um die Abdrehmulden in die jeweils vorgesehene Position zu bringen und in dieser Position entsprechend zu halten, ist vorgesehen, dass die Abdrehmulde um ihre Längsachse in zumindest zwei Positionen in der Schiebeführung verdrehbar angeordnet und in diese zumindest zwei Positionen festlegbar ist.

Um sicherzustellen, dass die Abdrehmulde in der einen Position das Material aufnehmen kann und in der anderen Position kein Material in die Abdrehmulde gelangt, ist vorgesehen, dass in der einen Position die Längsöffnung sich auf der Oberseite der Abdrehmulde und in der anderen Position sich die Längsöffnung auf der Unterseite der Abdrehmulde befindet.

Um ein einfaches verdrehen der Abdrehmulde sicherzustellen, ist vorgesehen, dass an der Abdrehmulde zumindest zwei beabstandet zueinander angeordnete kreisförmige, vorzugsweise geschlossene Lagerringe angeordnet sind, dass im Bereich der Lagerringe der Abdrehmulde an der Sämaschine mit den Lagerringen zusammenwirkende Lagerelemente angeordnet sind.

Um die Abdrehmulde in der jeweiligen Position zu sichern, dass zwischen der Sämaschine und der Abdrehmulde die Abdrehmulde in ihrer jeweiligen Position festsetzbare Fixierungselemente angeordnet sind.

Weitere Einzelheiten der Erfindung sind der Beispielsbeschreibung und den Zeichnungen zu entnehmen. Die Zeichnungen zeigen
- Fig.1: der Vorratsbehälter der Sämaschine mit einigen Dosiereinrichtungen und den Abdrehmulden in Abdrehposition in Prinzipdarstellung und in perspektivischer Ansicht schräg von hinten,
- Fig.2: der linke Teil des Vorratsbehälters gemäß Fig. 1 in der gleichen Darstellungsweise, jedoch im vergrößertem Maßstab,
- Fig.3: der untere Bereich des Vorratsbehälters gemäß Fig.1 in ausschnittsweiser Darstellung, in Seitenansicht, in Prinzipdarstellung und in vergrößertem Maßstab, wobei die Abdrehmulde sich in Abdrehposition befindet,
- Fig.4: die sich in Abdrehposition gemäß Fig.3 befindliche Abdrehmulde im verkleinertem Maßstab und perspektivischer Darstellung,
- Fig.5: der untere Bereich des Vorratsbehälters gemäß Fig.1 in ausschnittsweiser Darstellung, in Seitenansicht, in Prinzipdarstellung und in vergrößertem Maßstab, wobei die Abdrehmulde sich in Nichtabdrehposition befindet und
- Fig.6: die sich in Nichtabdrehposition gemäß Fig.5 befindliche Abdrehmulde im verkleinertem Maßstab und perspektivischer Darstellung.

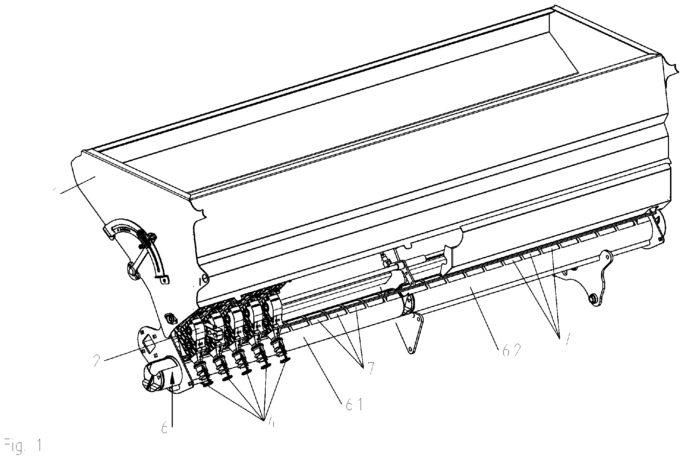

Die als Sämaschine ausgebildete Verteilmaschine weist den lang gestreckten und als Saatgutbehälter 1 ausgebildeten Vorratsbehälter auf. Der Saatgutbehälter 1 ist in bekannter und daher nicht näher dargestellter Weise auf einem Rahmen mit Laufrädern oder in geeigneter Weise auf einem Bodenbearbeitungsgerät aufgebaut. In Seitenansicht gesehen ist der Saatgutbehälter 1 zumindest in seinem unteren Bereich trichterförmig ausgebildet. In dem unteren Bereich des Saatgutbehälters 1 sind nebeneinander und beabstandet zueinander eine Anzahl von Auslassöffnungen angeordnet. Jeder Auslassöffnung ist eine als Dosierelemente ausgebildete Dosiereinrichtung 2 zugeordnet. Mittels der Dosiereinrichtungen 2, die Säräder 3 aufweisen, wird das Saatgut in bekannter Weise dosiert und Saatleitungen 4 zugeleitet. Von den Dosiereinrichtungen führen Saatleitungen 2 zu Ausbringelementen, um das dosierte Saatgut im Boden abzulegen. An dieser Stelle sei darauf hingewiesen, dass in den Zeichnungen aus Vereinfachungsgründen nur einige der Dosiereinrichtungen 2 auf der linken Seite der Sämaschine dargestellt sind. Selbst verständlich sind bei einer einsatzfähigen Maschine über die gesamte Breite des Saatgutbehälters 1 gleichmäßig verteilt, wie auf Fig.1 auf der linken Seite angedeutet, die Dosiereinrichtungen 2 mit den zugeordneten Saatleitungen 3 angeordnet.

Unterhalb der Dosiereinrichtungen 2 befindet sich eine in Längsrichtung des Saatgutbehälters 1 verlaufende Schiebeführung 5 für eine Abdrehmulde 6 oder aus mehreren Teilstücken 6.1,6.2 zusammengesetzte Abdrehmulde 6. Über die Schiebeführung 5 sind Abdrehmulden 6 entsprechend einschiebbar. Die Abdrehmulde 6 weist in Abdrehposition auf ihrer Oberseite die in Längsrichtung der Abdrehmulde 6 verlaufende längliche Öffnung oder Öffnungsabschnitte 7 auf. Die Abdrehmulde 6 ist einschiebbar und herausziehbar in der Schiebeführung 5 an der Sämaschine angeordnet. Nach dem Einschieben der Abdrehmulde 6 in die Schiebeführung 5 befindet sich diese zwischen der Dosiereinrichtung 2 und den Saatleitungen 4 und kann so das von den Säräder 3 der Dosiereinrichtung 2 bei der Abdrehprobe dosierte Material auffangen. Der Dosiereinrichtung 2 ist im Ausführungsbeispiel unterhalb des jeweiligen Särades 3 eine verschwenkbare Leitklappe 8 zugeordnet. Je nachdem ob die Abdrehprobe durchgeführt oder Saatgut ausgebracht wird, wird die Leitklappe 8 in die entsprechende Position gebracht, so dass während der Abdrehprobe das dosierte Material der Abdrehmulde 6 und während des Ausbringvorganges der jeweiligen Saatleitung 4 zugeleitet wird.

Die Abdrehmulde 6 weist einen kreisförmigen Querschnitt auf, wie die Zeichnungen zeigen. Die Schiebeführung 5 weist eine Drehlagerung 8 für das Verdrehen der Abdrehmulde 6 um ihre Längsachse auf. An der Abdrehmulde 6 sind zumindest zwei beabstandet zueinander angeordnete kreisförmige, vorzugsweise geschlossene Lagerringe 9 angeordnet. Im Bereich der Lagerringe 9 der Abdrehmulde 6 sind der Schiebeführung 5 der Sämaschine mit den Lagerringen 9 der Abdrehmulde 6 zusammenwirkende Lageelemente 10 angeordnet. Diese Lagerringe 9 und 10 an der Abdrehmulde 6 und der Schiebeführung 5 bilden die Drehlagerung 8 für das Verdrehen der Abdrehmulde 6 um ihre Längsachse in der Schiebeführung 5.

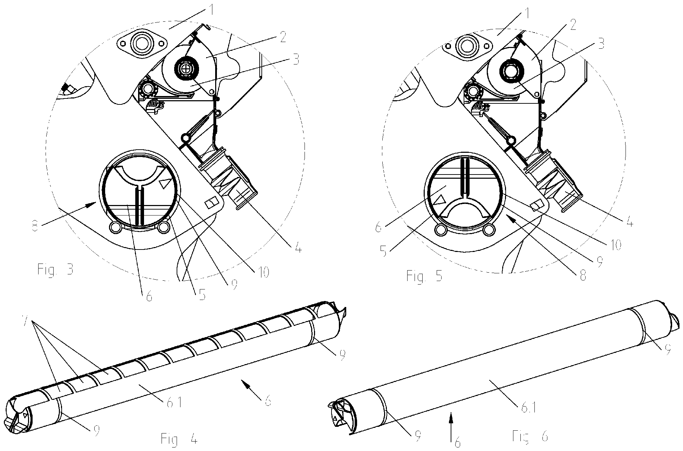

Der besseren Übersichtlichkeit sind in den Fig.3 und 5 die linken Seitenwände der Dosiergehäuse der Dosiereinrichtung 2 ausgeblendet, damit die Säräder und die Bodenklappen der Dosiereinrichtung zu sehen sind.

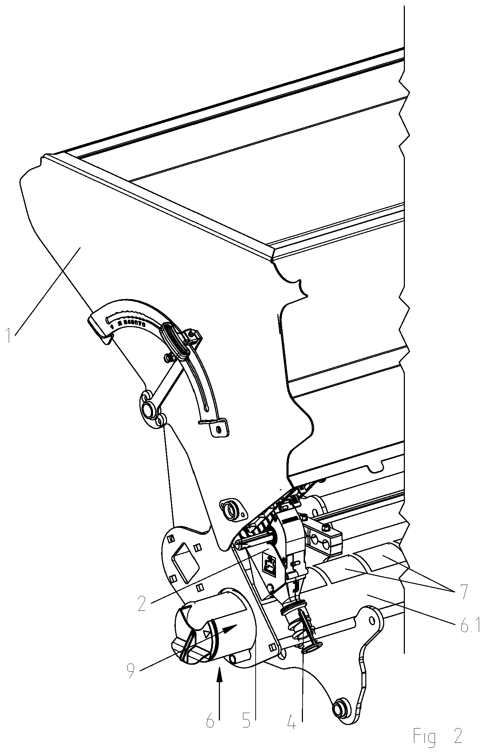

Die Abdrehmulde 6 ist um ihre Längsachse in zumindest zwei Positionen, nämlich einmal in die Abdrehposition gemäß den Fig. 1-4 und die in den Fig. 5 und 6 dargestellte Nichtabdrehposition in der Schiebeführung 5 aufgrund der drehbaren Lagerung 8 zu verdrehen. In der Abdrehposition gemäß den Fig. 1-4 befindet sich die Längsöffnung 7 auf der Oberseite der Abdrehmulde 6 und in der Nichtabdrehposition gemäß den Fig. 5 und 6 befindet sich die Längsöffnung 7 auf der Unterseite der Abdrehmulde 6. Mittels nicht dargestellter Exführungselemente, die zwischen der Sämaschine und der Abdrehmulde 6 angeordnet sind, ist die Abdrehmulde 6 in ihrer jeweiligen Position mittels der festsetzbaren Fixierungselemente festzusetzen.

## Patentansprüche

1. Sämaschine mit Saatgutbehälter (1), Dosiereinrichtungen (2) mit Särädern (3), Saatgutleitungen (4), die von den Dosiereinrichtungen (2) zu vorzugsweise als Säscharen ausgebildete Saatgutablageeinrichtungen führen und mit mindestens einer Abdrehmulde (6, 6.1, 6.2) für das Auffangen des Saatgutes bei der Durchführung einer Abdrehprobe, wobei die Abdrehmulde (6, 6.1, 6.2) eine in Längsrichtung der Abdrehmulde (6, 6.1, 6.2) verlaufende längliche Öffnung (7) aufweist, wobei die Abdrehmulde (6, 6.1, 6.2) zwischen den Saatgutleitungen (4) und den Dosiereinrichtungen (2) mit den Särädern (3) zum Auffangen des von den Särädern (3) ausgebrachten Materiales während der Durchführung der Abdrehprobe positionierbar und in einer Schiebeführung (5) in Längsrichtung der Abdrehmulde (6, 6.1, 6.2) einschiebbar und herausziehbar an der Sämaschine angeordnet ist, **dadurch gekennzeichnet, dass** die Abdrehmulde (6, 6.1, 6.2) einen kreisförmigen Querschnitt aufweist, dass die Abdrehmulde (6, 6.1, 6.2) an der Sämaschine in der Schiebeführung (5) um ihre Längsachse zumindest um 180° verdrehbar angeordnet ist.

2. Sämaschine nach Anspruch 1, **dadurch gekennzeichnet, dass** die Schiebeführung (5) für das Verdrehen der Abdrehmulde (6, 6.1, 6.2) um ihre Längsachse in der Schiebeführung (5) eine Drehlagerung (8) aufweist.

3. Sämaschine nach zumindest einem der vorstehenden Ansprüche, **dadurch gekennzeichnet, dass** die Abdrehmulde (6, 6.1, 6.2) um ihre Längsachse in zumindest zwei Positionen in der Schiebeführung (5) verdrehbar angeordnet und in diese zumindest zwei Positionen festlegbar ist.

4. Sämaschine nach Anspruch 3, **dadurch gekennzeichnet, dass** in der einen Position die Längsöffnung (7) sich auf der Oberseite der Abdrehmulde (6, 6.1, 6.2) und in der anderen Position sich die Längsöffnung (7) auf der Unterseite der Abdrehmulde (6, 6.1, 6.2) befindet.

5. Sämaschine nach zumindest einem der vorstehenden Ansprüche, **dadurch gekennzeichnet, dass** an der Abdrehmulde (6, 6.1, 6.2) zumindest zwei beabstandet zueinander angeordnete kreisförmige, vorzugsweise geschlossene Lagerringe (9) angeordnet sind, dass im Bereich der Lagerringe (9) der Abdrehmulde (6, 6.1, 6.2) an der Sämaschine mit den Lagerringen (9) zusammenwirkende Lagerelemente (10) angeordnet sind.

6. Sämaschine nach zumindest einem der vorstehenden Ansprüche, **dadurch gekennzeichnet, dass** zwischen der Sämaschine und der Abdrehmulde (6, 6.1, 6.2) die Abdrehmulde (6, 6.1, 6.2) in ihrer jeweiligen Position festsetzbare Fixierungselemente angeordnet sind.

## Claims

1. Sowing machine with a seed container (1), metering devices (2) with sowing wheels (3), seed lines (4) which lead from the metering devices (2) to seed-depositing devices, which are preferably designed as sowing coulters, and with at least one calibration tray (6, 6.1, 6.2) for catching the seed when a calibration test is carried out, wherein the calibration tray (6, 6.1, 6.2) has an elongate opening (7) running in the longitudinal direction of the calibration tray (6, 6.1, 6.2), wherein the calibration tray (6, 6.1, 6.2) is arranged on the sowing machine so as to be positionable between the seed lines (4) and the metering devices (2) with the sowing wheels (3) in order to touch the material discharged by the sowing wheels (3) while the calibration test is being carried out, and so as to be retractable and extendable in a sliding guide (5) in the longitudinal direction of the calibration tray (6, 6.1, 6.2), **characterized in that** the calibration tray (6, 6.1, 6.2) has a circular cross section, **in that** the calibration tray (6, 6.1, 6.2) is arranged in the sliding guide (5) on the sowing machine so as to be rotatable at least by 180° about its longitudinal axis.

2. Sowing machine according to Claim 1, **characterized in that** the sliding guide (5) has a rotary bearing (8) for rotating the calibration tray (6, 6.1, 6.2) about its longitudinal axis in the sliding guide (5).

3. Sowing machine according to at least one of the preceding claims, **characterized in that** the calibration tray (6, 6.1, 6.2) is arranged in the sliding guide (5) so as to be rotatable about its longitudinal axis into at least two positions and is securable in said at least two positions.

4. Sowing machine according to Claim 3, **characterized in that**, in the one position, the longitudinal opening (7) is located on the upper side of the calibration tray (6, 6.1, 6.2) and, in the other position, the longitudinal opening (7) is located on the lower side of the calibration tray (6, 6.1, 6.2).

5. Sowing machine according to at least one of the preceding claims, **characterized in that** at least two circular, preferably closed bearing rings (9) which are arranged at a distance from each other are arranged on the calibration tray (6, 6.1, 6.2), **in that**, bearing elements (10) interacting with the bearing rings (9) are arranged on the sowing machine in the region of the bearing rings (9) of the calibration tray (6, 6.1, 6.2).

6. Sowing machine according to at least one of the preceding claims, **characterized in that** fixing elements which can secure the calibration tray (6, 6.1, 6.2) in its respective position are arranged between the sowing machine and the calibration tray (6, 6.1. 6.2).

## Revendications

1. Semoir comprenant un récipient de semences (1), des dispositifs de dosage (2) avec des roues distributrices (3), des lignes de semences (4) qui conduisent depuis les dispositifs de dosage (2) jusqu'aux dispositifs de dépôt de semences réalisés de préférence sous forme de socs de semoir et au moins un auget d'étalonnage (6, 6.1, 6.2) pour recueillir les semences lors de la réalisation d'un échantillon d'étalonnage, l'auget d'étalonnage (6, 6.1, 6.2) présentant une ouverture oblongue (7) s'étendant dans la direction longitudinale de l'auget d'étalonnage (6, 6.1, 6.2), l'auget d'étalonnage (6, 6.1, 6.2) pouvant être positionné entre les lignes de semences (4) et les dispositifs de dosage (2) avec les roues distributrices (3) pour recueillir la matière déchargée par les roues distributrices (3) pendant la réalisation de l'échantillon d'étalonnage et étant disposé sur le semoir de manière à pouvoir être inséré dans un guide coulissant (5) dans la direction longitudinale de l'auget d'étalonnage (6, 6.1, 6.2) et à pouvoir être ressorti de celui-ci, **caractérisé en ce que** l'auget d'étalonnage (6, 6.1, 6.2) présente une section transversale circulaire, **en ce que** l'auget d'étalonnage (6, 6.1, 6.2) est disposé sur le semoir dans le guide coulissant (5) de manière à pouvoir tourner au moins de 180° autour de son axe longitudinal.

2. Semoir selon la revendication 1, **caractérisé en ce que** le guide coulissant (5) présente un support sur palier pivotant (8) pour la rotation de l'auget d'étalonnage (6, 6.1, 6.2) autour de son axe longitudinal dans le guide coulissant (5).

3. Semoir selon au moins l'une quelconque des revendications précédentes, **caractérisé en ce que** l'auget d'étalonnage (6, 6.1, 6.2) est disposé de manière à pouvoir tourner autour de son axe longitudinal dans au moins deux positions dans le guide coulissant (5) et peut être fixé dans ces au moins deux positions.

4. Semoir selon la revendication 3, **caractérisé en ce que** dans l'une des positions, l'ouverture longitudinale (7) se trouve sur le côté supérieur de l'auget d'étalonnage (6, 6.1, 6.2) et dans l'autre position, l'ouverture longitudinale (7) se trouve sur le côté inférieur de l'auget d'étalonnage (6, 6.1, 6.2).

5. Semoir selon au moins l'une quelconque des revendications précédentes, **caractérisé en ce qu'**au moins deux bagues de palier (9) espacées l'une de l'autre, de forme circulaire, de préférence fermées, sont disposées sur l'auget d'étalonnage (6, 6.1, 6.2), et **en ce que** dans la région des bagues de palier (9) de l'auget d'étalonnage (6, 6.1, 6.2), des éléments de palier (10) coopérant avec les bagues de palier (9) sont disposés sur le semoir.

6. Semoir selon au moins l'une quelconque des revendications précédentes, **caractérisé en ce qu'**entre le semoir et l'auget d'étalonnage (6, 6.1, 6.2), sont disposés des éléments de fixation pouvant fixer l'auget d'étalonnage (6, 6.1, 6.2) dans sa position respective.
